# FASCICULE DE BREVET EUROPEEN

(11) **EP 0 516 512 B1**
(45) Date de publication et mention de la délivrance du brevet: **10.08.1994**
(21) Numéro de dépôt: 92401387.3
(22) Date de dépôt: 21.05.1992
(51) Int. Cl.: B60N 2/36, B60R 22/22

(54) **Banquette arrière de véhicule automobile**
Rücksitzbank für Kraftfahrzeuge
Rear seat bench for motor cars

(30) Priorité: 30.05.1991 FR 9106832
(43) Date de publication de la demande: 02.12.1992
(73) Titulaire: AUTOMOBILES PEUGEOT, 75116 Paris (FR); AUTOMOBILES CITROEN, 92200 Neuilly-sur-Seine (FR)
(72) Inventeur: Besnard, Alain, F-78150 Le Chesnay (FR)
(74) Mandataire: Boivin, Claude

(56) Documents cités:
- EP-A- 0 004 484
- EP-A- 0 004 485
- DE-A- 2 931 552
- DE-A- 3 814 766

## Description

Les véhicules de tourisme sont de plus en plus équipés de banquettes arrière dont l'assise est relevable et le dossier rabattable afin d'offrir un volume de rangement important. Une telle banquette est connu par exemple par DE-A-2 931 552.

Ces banquettes sont munies de ceintures de sécurité dont les brides à boucle sont ancrées au sol en traversant des ouvertures des banquettes. Telles qu'elles sont jusqu'à présent réalisées, les banquettes risquent d'être endommagées par les brins à boucle des ceintures lorsqu'on relève l'assise.

La présente invention a pour objet une banquette arrière perfectionnée de manière à remédier à cet inconvénient.

Selon l'invention, l'assise de la banquette comporte un prolongement dirigé vers le haut qui se raccorde au dossier en constituant la partie inférieure de ce dossier et des ouvertures pour le passage des brins à boucle des ceintures sont pratiquées dans ce prolongement.

Dans un mode de réalisation avantageux de l'invention, l'assise est reliée au plancher du véhicule par des moyens permettant une translation longitudinale de cette assise, puis une rotation autour d'un axe transversal. Le mouvement de translation dégage les brins à boucle de l'assise et le mouvement de rotation amène l'assise en position relevée sans que ce mouvement soit gêné par les boucles des ceintures.

On a décrit ci-après, à titre d'exemple non limitatif, un mode de réalisation d'une banquette selon l'invention, avec référence aux dessins annexés dans lesquels :
La Figure 1 est une vue en élévation de la banquette;
La Figure 2 est une vue de détail à plus grande échelle montrant les chapes reliant l'assise au plancher du véhicule;
Les Figures 3 et 4 sont des vues de détail à plus grande échelle montrant la liaison d'un brin à boucle au plancher du véhicule;
La Figure 5 est une vue semblable à la Figure 1, lors du relevage de l'assise;
La Figure 6 est une vue semblable à la Figure 1, l'assise étant relevée et le dossier rabattu.

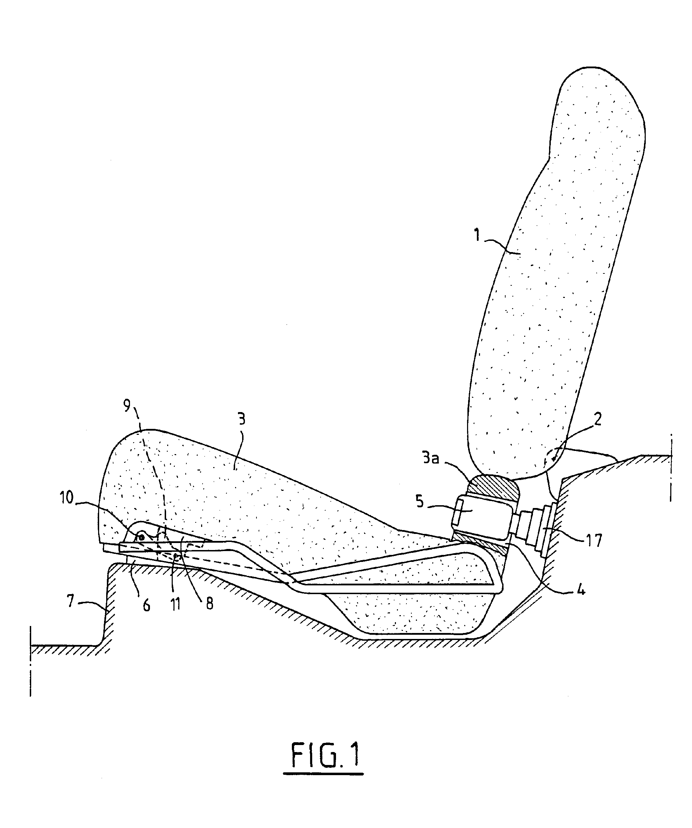

Telle qu'elle est représentée à la Figure 1, la banquette arrière comporte un dossier 1 qui est articulé en 2 sur la structure du véhicule et une assise 3 qui comporte un prolongement 3a dirigé vers le haut. Ce prolongement se raccorde au dossier 1 dont il constitue la partie inférieure; il comporte des ouvertures 4 dans lesquelles passent des brins courts munis de boucles 5 des ceintures de sécurité arrière.

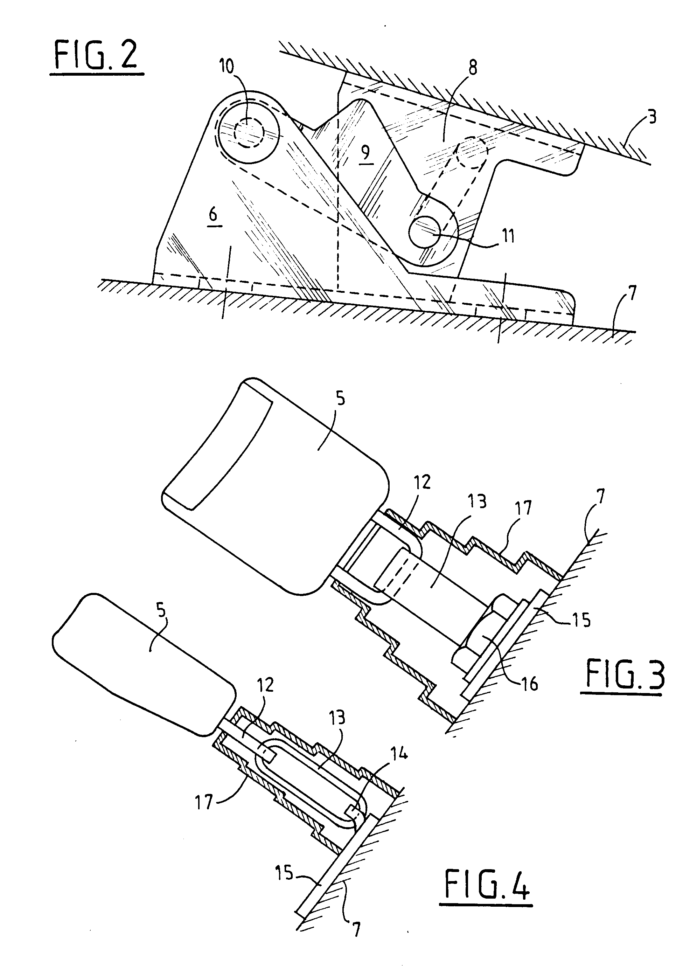

Comme on peut le voir plus particulièrement à la Figure 2, une première chape 6 est fixée au plancher 7 du véhicule et une seconde chape 8 est fixée à l'assise 3. Les deux chapes sont reliées l'une à l'autre par une paire de bielles 9 disposées chacune d'un côté de l'assise. Chaque bielle est reliée au plancher par un pivot 10 et à l'assise par un pivot 11.

Il est prévu une paire de chapes et une bielle de chaque côté de l'assise et les deux pivots 11 sont reliés l'un à l'autre par une barre de liaison transversale non représentée.

Chaque boucle de ceinture 5 est terminée par un pontet ou boucle 12 qui est reliée à une boucle 13 accrochée à un crochet 14 d'une platine 15 fixée au plancher 7 par une vis 16. L'ensemble formé par les boucles et la platine est recouvert par un soufflet de protection 17, en matière plastique.

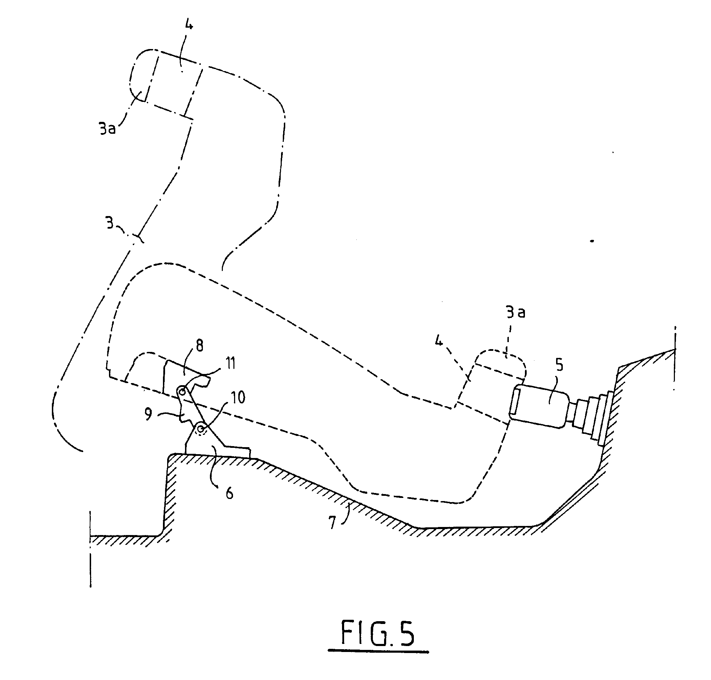

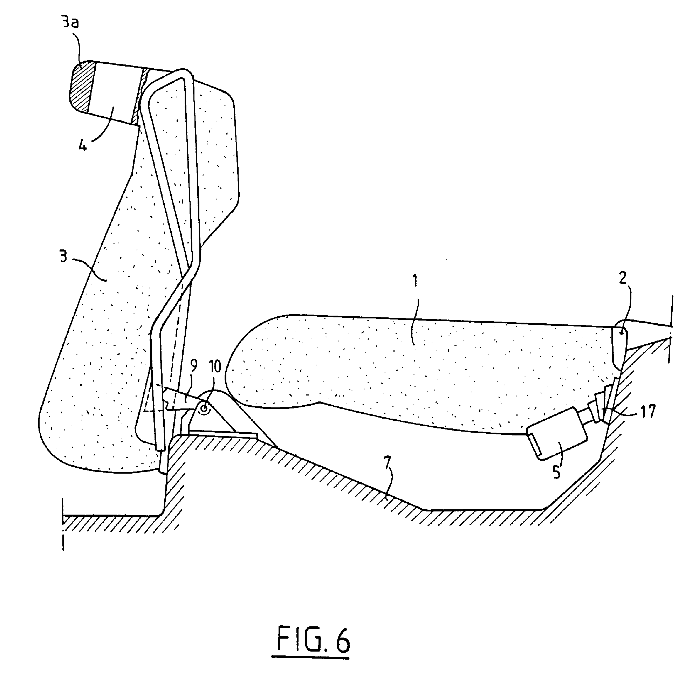

L'assise 3 étant dans sa position d'utilisation normale représentée à la Figure 1, on la fait tout d'abord pivoter vers le haut autour de l'axe des pivots 11, afin de relever son bord avant, puis on la déplace vers l'avant, les bielles 9 pivotant autour de l'axe des pivots 10, ce qui dégage les boucles 5 des ouvertures 4 (Figure 5) et on redresse enfin l'assise en faisant pivoter les chapes 8 autour de l'axe des pivots 11. Il ne reste plus qu'à rabattre le dossier 1 pour faire plancher; les brins de ceinture munis des boucles 5 s'escamotent sous le dossier (Figure 6).

## Revendications

1. Banquette arrière de véhicule automobile dont l'assise (3) est relevable et le dossier (1) rabattable et qui comporte des ouvertures (4) pour le passage des brins à boucle (5) ancrés au sol des ceintures de sécurité arrière,
caractérisée en ce que l'assise (3) de la banquette comporte un prolongement (3a) dirigé vers le haut qui se raccorde au dossier (1) en constituant la partie inférieure de ce dossier et en ce que desdites ouvertures (4) sont pratiquées dans ce prolongement (3a).

2. Banquette selon la revendication 1, caractérisé en ce que l'assise (3) est reliée au plancher (7) du véhicule par des moyens permettant une translation longitudinale de cette assise, puis une rotation autour d'un axe transversal.

3. Banquette selon la revendication 2, caractérisée en ce que des moyens de liaison de l'assise (3) au plancher (7) permettent tout d'abord une première rotation pour dégager son avant, un mouvement de translation longitudinale, puis une seconde rotation.

4. Banquette selon la revendication 2 ou 3, caractérisée en ce qu'elle comporte, sur chacun de ses côtés, une première chape (6) fixée au plancher (7), une seconde chape (8) fixée à l'assise (3), et une bielette (9) reliant ces deux chapes.

5. Banquette selon l'une des revendications 1 à 4, caractérisée en ce que les brins à boucle des ceintures sont reliés au plancher (7) du véhicule par une boucle ou patte de liaison (13) qui est en prise avec une boucle ou un pontet (12) solidaire de la boucle (5) de la ceinture et qui est engagée par le crochet (14) d'une platine (15) fixée au plancher (7), l'ensemble étant recouvert d'un soufflet (17).

## Patentansprüche

1. Rücksitzbank für Kraftfahrzeuge, deren Sitzteil (3) hochklappbar und deren Rückenlehne (1) herunterklappbar ist und die Öffnungen (4) für den Durchtritt der den Verschluß (5) tragenden, am Boden verankerten Stränge der hinteren Sicherheitsgurte aufweist, dadurch gekennzeichnet, daß das Sitzteil (3) der Sitzbank eine nach oben gerichtete Verlängerung (3a) aufweist, die sich an die Rückenlehne (1) anschließt, indem sie den unteren Teil dieser Rückenlehne bildet und daß die besagten Öffnungen (4) in dieser Verlängerung (3a) angeordnet sind.

2. Rücksitzbank nach Anspruch 1, dadurch gekennzeichnet, daß das Sitzteil (3) mit dem Boden (7) des Fahrzeugs über Mittel verbunden ist, die eine Längsverschiebung dieses Sitzteils und dann eine Drehung um eine Querachse ermöglichen.

3. Rücksitzbank nach Anspruch 2, dadurch gekennzeichnet, daß die Mittel zur Verbindung des Sitzteils (3) mit dem Boden (7) zu allererst eine erste Drehung zum Freisetzen seines vorderen Endes, dann eine Verschiebungsbewegung in Längsrichtung und dann eine zweite Drehung ermöglichen.

4. Rücksitzbank nach Anspruch 2 oder 3, dadurch gekennzeichnet, daß sie an jeder ihrer Seiten ein erstes am Boden (7) befestigtes Gabelstück (6), ein zweites am Sitzteil (3) befestigtes Gabelstück (8) und einen diese beiden Gabelstücke miteinander verbindenden Schwingarm (9) aufweist.

5. Rücksitzbank nach einem der Ansprüche 1 bis 4, dadurch gekennzeichnet, daß die den Verschluß tragenden Stränge der Gurte mit dem Boden (7) des Fahrzeugs über eine Verbindungsöse oder -klaue (13) verbunden sind, die in eine fest mit dem Verschluß (5) des Gurts verbundene Öse oder einen Bügel (12) eingreift und durch den Haken (14) einer am Boden (7) befestigten Halteplatte (15) festgehalten ist, wobei die ganze Anordnung von einem Balg (17) umhüllt ist.

## Claims

1. Motor vehicle back seat whose seat (3) is able to be raised and back rest (1) able to be folded down and which comprises openings (4) for the passage of loop strands (5) anchored to the foot of the rear safety belts,
wherein the seat (3) of the back seat comprises an extension (3a) directed upwards and connected to the back rest (1) thus constituting the lower portion of this back rest, and wherein said openings (4) are made in this extension (3a).

2. Back seat according to claim 1,
wherein the seat (3) is connected to the floor (7) of the vehicle by means allowing for a longitudinal translation of this seat and then a rotation around a transverse axis.

3. Back seat according to claim 2,
wherein the means for linking the seat (3) to the floor (7) permit firstly a first rotation so as to free its front portion, a longitudinal translation movement and then a second rotation.

4. Back seat according to claim 2 or 3,
wherein it comprises on each of its sides a first fork joint (6) fixed to the floor (7), a second fork joint (8) fixed to the seat (3), and a connecting rod (9) connecting these two fork joints.

5. Back seat according to any one of claims 1 to 4,
wherein the loop flanges of the belts are connected to the floor (7) of the vehicle by a loop or linking block (13) which is engaged with a loop or connecting arch (12) integral with the loop (5) of the belt and which is engaged by the hook (14) of a mounting plate (15) fixed to the floor (7), the unit being covered with a pair of bellows (17).
